# EUROPEAN PATENT APPLICATION

(11) **EP 2 113 870 A1**
(43) Date of publication of application: **04.11.2009**
(21) Application number: 09005191.3
(22) Date of filing: 09.04.2009
(51) Int. Cl.: G06Q 10/00

(54) **System and method for providing and managing technology-based information**

(30) Priority: 29.04.2008 US 111438
(71) Applicant: Bayerische Motoren Werke, 80809 München (DE)
(72) Inventor: Bossmeyer, Hans, 82110 Germering (DE); Prick, Guido, 80802 München (DE); Ertl, Martin, 81247 München (DE); Rath, Michael, 80801 München (DE)

(57) **Abstract**

A predetermined set of technology attributes is defined, where the technology attributes correspond to set of predetermined traits for a particular subtechnology. A plurality of subtechnologies may then be identified, where each of the plurality of subtechologies may be defined or characterized by a common granularity level. In one embodiment, a plurality of subtechnology profiles, corresponding to the identified plurality of subtechologies, may be generated. In one embodiment, such subtechnology profiles may be generated based on the previously-defined set of technology attributes. The generated subtechnology profiles may then be stored in a common technology database, to which access may be provided using a common user interface.

## Description

### CROSS REFERENCE TO RELATED APPLICATIONS

This application is related to U.S. patent application entitled SYSTEM AND METHOD FOR UTILIZING TECHNOLOGY INTERCONNECTIVITIES, and U.S. patent application entitled SYSTEM AND METHOD FOR UTILIZING ORGANIZATION-LEVEL TECHNOLOGY DEMAND INFORMATION, both of which are filed on even date herewith.

### FIELD OF THE INVENTION

The present invention relates in general to technology-based information, and more particularly to a novel methodology for providing and managing such information.

### BACKGROUND OF THE INVENTION

It is a well known fact the technological landscape today is extremely diverse and evolving at incredible rates. Technologies new and old, simple and complex are being developed at a rate that makes it difficult for a business to keep track, and from the standpoint of industry leaders that rely on the cutting-edge, an efficient management system geared towards minimizing this difficulty is a practical necessity.

There are of course known databases available, including the popular public resources of Google™, Wikipedia™ and numerous other searching resources. One additional private resource is known as the Engineering Village™, which is a collection of several research databases covering a wide variety of research reports, trade journals and conference proceedings. The information included in all these resources, though vast, is unfortunately disorganized, one dimensional and in many cases repetitive.

Although most, if not all, of the these searching resources have advanced searching capability that allows users to search over a wide variety of search terms, all such searching capabilities are textually-based. Thus, while it may be possible to narrow search results by including or excluding certain terms, there is no possibility to search for concrete relationships with other potentially relevant technologies. In that sense, the currently available searching resources are, at most, information resources, and not knowledge resources.

### BRIEF SUMMARY OF THE INVENTION

Disclosed and claimed herein are systems and methods for providing and managing technology-based information. In one embodiment, a method includes defining a set of technology attributes, identifying a number of subtechnologies, where each of the subtechnologies is characterized by a common granularity level. The method further includes generating subtechnology profiles corresponding to each of the subtechnologies based on the set of technology attributes, storing the subtechnology profiles in a technology database, and providing access to the technology database using a common user interface.

Other aspects, features, and techniques of the invention will be apparent to one skilled in the relevant art in view of the following detailed description of the invention.

### BRIEF DESCRIPTION OF THE DRAWINGS

The features, objects, and advantages of the present invention will become more apparent from the detailed description set forth below when taken in conjunction with the drawings in which like reference characters identify correspondingly throughout and wherein:

FIG. 1 depicts a simplified system diagram as may be employed by one or more embodiments;

FIGs. 2A - 2H depict various graphical user interfaces for implementing one or more aspects of the invention;

FIG. 3 depicts a flow diagram for one embodiment of a process for carrying out the invention;

FIG. 4 depicts a flow diagram for another embodiment of a process for carrying out the invention; and

FIG. 5 depicts a flow diagram for still another embodiment of a process for carrying out the invention.

### DETAILED DESCRIPTION OF EXEMPLARY EMBODIMENTS

### Overview of the Disclosure

The present disclosure relates generally to a system and method for providing and managing technology-based information. One aspect of the invention relates to enhancing the innovation process in engineering by defining and utilizing optimized technology profiles and their relationships to one another. The invention seeks to effectively deal with an ever evolving technological world by minimizing its complexity from a granular, organizational and connectivity standpoint.

Another aspect of the invention relates to defining a predetermined set of technology attributes. Such technology attributes may correspond to a set of predetermined traits that, when defined, may encompass everything from the basic description of a subtechnology to the intricate channels through which the world affects it, and it affects the world. In one embodiment, a plurality of subtechnologies may then be identified, wherein each of the plurality of subtechologies may be defined or characterized by a common granularity level. Once this plurality of subtechnologies have been properly identified a corresponding plurality of subtechnology profiles may be generated. In one embodiment, these subtechnology profiles may be generated based on the previously-defined set of technology attributes. In one embodiment, the generated subtechnology profiles may then be stored in a common technology database, to which access may be provided using a common user interface.

As used herein, the terms "a" or "an" shall mean one or more than one. The term "plurality" shall mean two or more than two. The term "another" is defined as a second or more. The terms "including" and/or "having" are open ended (e.g., comprising). The term "or" as used herein is to be interpreted as inclusive or meaning any one or any combination. Therefore, A, B or C means any of the following: A; B; C; A and B; A and C; B and C; A, B and C. An exception to this definition will occur only when a combination of elements, functions, steps or acts are in some way inherently mutually exclusive. Reference throughout this document to "one embodiment", "certain embodiments", "an embodiment" or similar term means that a particular feature, structure, or characteristic described in connection with the embodiment is included in at least one embodiment of the present invention. Thus, the appearances of such phrases in various places throughout this specification are not necessarily all referring to the same embodiment. Furthermore, the particular features, structures, or characteristics may be combined in any suitable manner on one or more embodiments without limitation.

In accordance with the practices of persons skilled in the art of computer programming, the invention is described below with reference to operations that are performed by a computer system or a like electronic system. Such operations are sometimes referred to as being computer-executed. It will be appreciated that operations that are symbolically represented include the manipulation by a processor, such as a central processing unit, of electrical signals representing data bits and the maintenance of data bits at memory locations, such as in system memory, as well as other processing of signals. The memory locations where data bits are maintained are physical locations that have particular electrical, magnetic, optical, or organic properties corresponding to the data bits.

When implemented in software, the elements of the invention are essentially the code segments to perform the necessary tasks. The code segments can be stored in a processor readable medium, which may include any medium that can store or transfer information. Examples of the processor readable mediums include an electronic circuit, a semiconductor memory device, a read-only memory (ROM), a flash memory or other non-volatile memory, a floppy diskette, a CD-ROM, an optical disk, a hard disk, a fiber optic medium, etc.

### The Concept of Subtechnogies

As used herein, the term "considered technology" refers to any technology being considered by a project that can be broken down into various broad, but fundamental working systems. The term "proper technology" is any technology that represents the physical implementation of one of a considered technology's fundamental working systems. In addition, a "technological function" is any scientifically based purpose that is necessary for the proper or desired operational effect of a fundamental component of a proper technology.

A "physical effect" describes the scientific mechanism or process behind the characteristic effects resulting from, or used as a basis for the normal operation of a subtechnology that allows it to fulfill a technological function.

In addition, a "technology family" is a group of technologies that are related in a way where they all fall under a common theme, but where the theme is so broad that the technologies cannot be considered as any type of proper or improper variant of one another. Note: a technology field is any group of technology families related in a similar fashion.

In its broadest sense, a "subtechnology" is an area of field of technology having a granularity between that of a technology family and a physical effect. A subtechnology may refer to a technology component of a proper technology that provides a way to fulfill a technological function of that proper technology, and which also exhibits a set of common characteristics. In one embodiment, the common characteristics of a subtechnology may be that:
- it's variants should not 'proliferate to excess';
- it should be a physical representation of one or more specific physical effects, and not a physical effect itself;
- it should be less granular than a technology family; and
- it should not be a product itself, rather it can be the working principle behind a product.

With reference to the term "proliferate to excess," if a technology has either so many proper variants that it becomes practical to call them all different technologies instead of variants of one technology, or the technology has one or more improper variants, then it may be said that the technological concept has variants that 'proliferate to excess.'

A proper variant is any modified version of something that fulfills the same purposes, but that does not differ so much from the original entity that it becomes more useful or practical to consider the modified version as unique in itself rather than a variant of the original entity. In contrast, an improper variant is any modified version of something that does not fit the description of a proper variant.

The concept of what a subtechnology is is rooted in understanding that technologies can be divided into levels of granularity. In short, in order to profile a subtechnology, one must first determine the optimal granularity level for a technological area. For example, a subtechnology profile of a sport utility vehicle is less likely to be helpful to an innovation engineer than a profile for organic light-emitting diodes. Thus, one aspect of the invention is to filter technologies into those that aptly reflect this optimal complexity level and focus on their functional contribution or utilization. This may have the further benefit of reducing the technological complexities caused by interconnectivity identification since there is a focus on the functionality of the underlying subtechnology and not the application thereof.

As previously mentioned, a subtechnology may be said to have a granularity between that of a technology family and a physical effect (such as electroluminescence). When using the concept of a physical effect in conjunction with the process of creating a technology profile, the subtechnology's attributes (described below) can be used as a signal to help identify unfavorably granular technologies. It should also be noted, however, that the field/family structure may be only semi-permanent, meaning that as the technological landscape changes and new fields or families emerge, the structure may change as well.

In one embodiment, the invention achieves this granular filtering of technology into subtechnologies by systematically applying a set of guidelines and refinement routines to a technological concept until either a suitable or optimal subtechnology profile is achieved, or the technological concept is deemed outside the optimal complexity level and thus excluded from the database. These predetermined guidelines and refinement routines may be referred to as profile creation procedures, and may further include a description of what type of information should be entered into the individual attributes, how the information should be recorded, and documentation on where in the field/family structure for the subtechnology is organized.

Subtechnologies having unfavorable granularities may be classified umbrella technologies, product engineering technologies, and exceedingly granular technologies. Umbrella technologies, such as energy harvesting, are technologies that fit the pragmatic definition of subtechnology, but that are more of a collection of individual, more optimal subtechnologies. Product engineering technologies, such as combustion engines, are those that represent the engineering behind a specific product rather than the technique behind a subtechnology. A better example would be hydrogen combustion, which has application in combustion engines, but represents the technique behind the combustion and not just combustion itself. Exceedingly granular technologies, such as electroluminescence, are technologies that exist more optimally as an attribute (here, a physical effect) of a subtechnology rather than as a stand-alone subtechnology. Proper definition of the attributes for a considered technology should effectively filter out the more optimal granularities, and the profile creation procedure is designed around this.

By way of example, consider the electric drivetrain of a battery electric vehicle. Proper technologies may include the battery system, transmission or drivetrain, and drive dynamic control systems. The components of the battery system may include the battery itself (various types), the battery operation management system, and the battery energy management system (cooling, insulating). Similarly, the components of drive dynamic control systems may include the brake system (energy harvesting potential for charging battery or powering supplementary systems such as air conditioner or stereo), suspension system (same energy harvesting potential), driver feedback systems (dashboard gauges, throttle controls, power steering, etc.), and the automated traction control systems (ABS, 4WD, AWD, ESP, etc.).

With the proper technologies identified, again by way of example only, we may consider whether energy harvesting is a true or relevant subtechnology. First, we identify a common granularity level for our subtechnologies and, once determined, apply the same of criteria across our set of proper technologies. This common granularity may be determined by answering the following questions, although it should of course be appreciated that other criteria may be used in defining the granularity level and/or determining a relevant subtechnology:
- Can it be a technological component of a proper technology?
- Can it fulfill a technological function of a proper technology?
- It's variants don't proliferate to excess (green means they don't)?
- Is it a physical representation of greater than a physical effect?
- Is it less granular than a technology family?
- It's not a product, rather it can be a working principle behind a product?

In this example, we are considering energy harvesting, which is the process by which energy is captured and stored for further use. With respect to the first question set forth above, we see that it can not be a physical component of a proper technology, because by definition it is a process, not a physical thing. With respect to the second question, while energy harvesting can be the technological function of a proper technology, the abstract idea of energy harvesting itself is not a physical component that can accomplish it. For the third question, energy harvesting can be many different unique technologies (water turbine, running shoe, knee implant, etc.). For the fourth question, energy harvesting does not fit the definition of a physical effect because it is the characteristic effect related to the normal operation of a subtechnology, not an explanation of the scientific mechanism or process behind it. For the fifth question, energy harvesting is less granular than a technology family, because all of its variants have such a similar working purpose. And finally, energy harvesting is not a product, but can be the working principle behind one. Since we were not able to answer all of the criteria in the affirmative, energy harvesting would not be a subtechnology under our chosen criteria.

Another example is piezoelectronic damping systems, which are electrical systems that utilize the piezoelectric effect of a material to generate electricity that regulates an actuator for the purpose of damping the motion of that material. We answer the granularity questions chosen for this example as follows:
Question 1: It could be a component of an intelligent suspension system.
Question 2: It could help with variable shock absorption.
Question 3: It does not have myriad variants, just scaled variants, and variants on type of piezoelectric material used.
Question 4: It is a physical representation of the piezoelectric effect in use.
Question 5: It is less granular than a technology family.
Question 6: It is not a product itself, but it can be used as a basis for one.

Based on affirmative answers to each of the above questions, we can conclude that piezoelectronic damping system is a subtechnology. Again, it should be noted that the specific criteria used to define the common granularity level and hence, when something is a subtechnology, may vary, and the criteria applied herein to define the granularity level should not be limiting.

One final example is H2-combustion, which is the exothermic chemical reaction between hydrogen and oxygen that produces water vapor and energy. We may answer the granularity questions chosen for this example as follows:
Question 1: It can be a technological component of an engine or motor.
Question 2: One technological function of an engine or motor is to convert chemical bond energy, and H2-Combustion certainly does that.
Question 3: The only real variants are if you add fuel aggregates into the mixture, but those do not seem to proliferate to excess.
Question 4: Combustibility fits the description of a physical effect, and H2-Combustion is a physical representation of it.
Question 5: It is less granular than a technological family.
Question 6: It is not a product, but it can be used as a basis for an H2-Combustion based product.

Based on affirmative answers to each of the above questions, we can conclude that H2-combustion is also a valid subtechnology according to the chosen criteria applied for the granularity level of this example.

Table 1 below summarizes the results of the above-described examples, as well as a few additional examples.

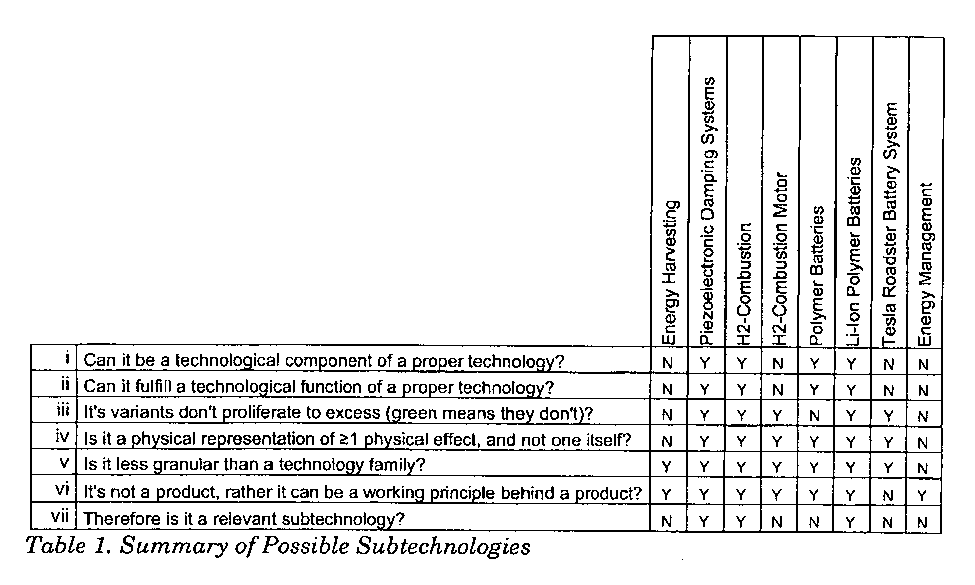

### Exemplary Network Overview

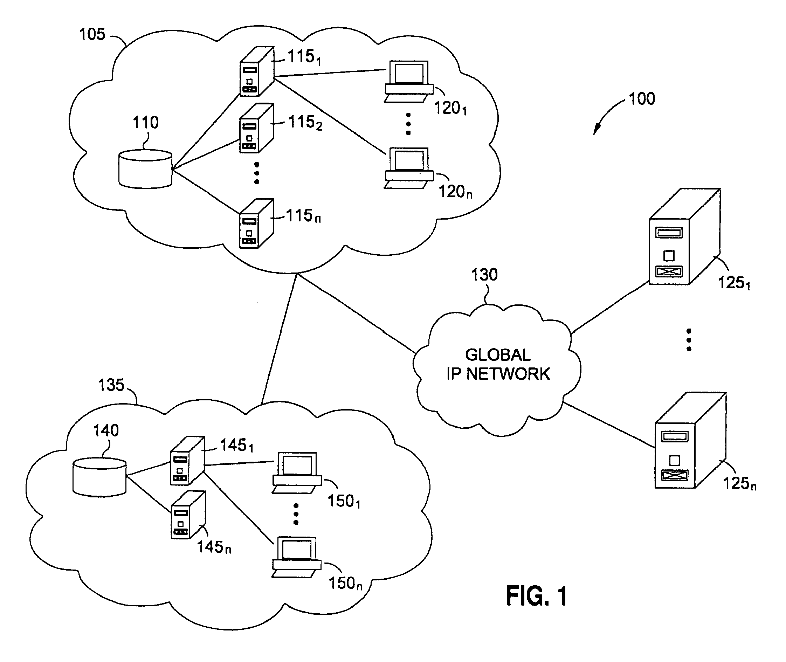

As depicted in FIG. 1, a simplified system diagram is provided for an extended data network **100** configured to implement one or more embodiments of the invention. As shown, extended network **100** includes an organization-level network **105.** While in one embodiment, the organization-level network **105** may correspond to a single company or business, it should equally be appreciated that the organization-level network **105** may relate to other organization levels as well (e.g., country, institution, industry, etc.). Regardless, the organization-level network **105** is comprised of a technology database **110** which, as will be described in detail below, may contain detailed information on a collection of technologies. As shown, the technology database **110** may be accessible through one or more servers **115₁ - 115ₙ.** The servers are, in turn, accessible by one or more work stations **120₁** - **120ₙ.** Alternatively, the technology database **110** may be directly accessible by the work stations **120₁ - 120ₙ.** In certain embodiments, the work stations **120₁ - 120ₙ** may be configured to execute software which generates a graphical user interface (GUI) specially designed to interface with the technology database **110** and to access the underlying information stored therein. In this fashion, individuals associated with the organization (e.g., employees, contractors, etc.) may access the technology database **110** via the database GUI of the work stations **120₁** - **120ₙ.** It should of course be appreciated that the technology database **110** may be a single database or a collection of individual databases.

Continuing to refer to FIG. 1, the organization-level network **105** may optionally be able to access one or more third-party servers **125₁ - 125ₙ** over a global network **130** (e.g., the Internet). Such third-party servers **125₁ - 125ₙ** may correspond to publicly-accessible online information sources, as well as to subscription based sources. In one embodiment, the technology database **110** may be populated with information obtained from the third-party servers **125₁ - 125ₙ.**

The extended network **100** of FIG. 1 further depicts the organization-level network **105** as optionally being able to communicate with an external organization-level network, such as network **135.** As with the organization-level network **105,** the external organization-level network 135 may correspond to a single company or business, or to any other type of organization (e.g., country, institution, industry, etc.).

The external organization-level network **135** of FIG. 1 also includes a technology database **140** that is accessible through one or more servers **145₁ - 145ₙ,** and in turn, by one or more work stations **150₁ - 150ₙ.** In this fashion, the organization-level network **105** may share information with other organizations, thereby potentially improving the quantity and quality of the information available to, or stored on, the technology database **110.**

### Exemplary Embodiments of the Invention

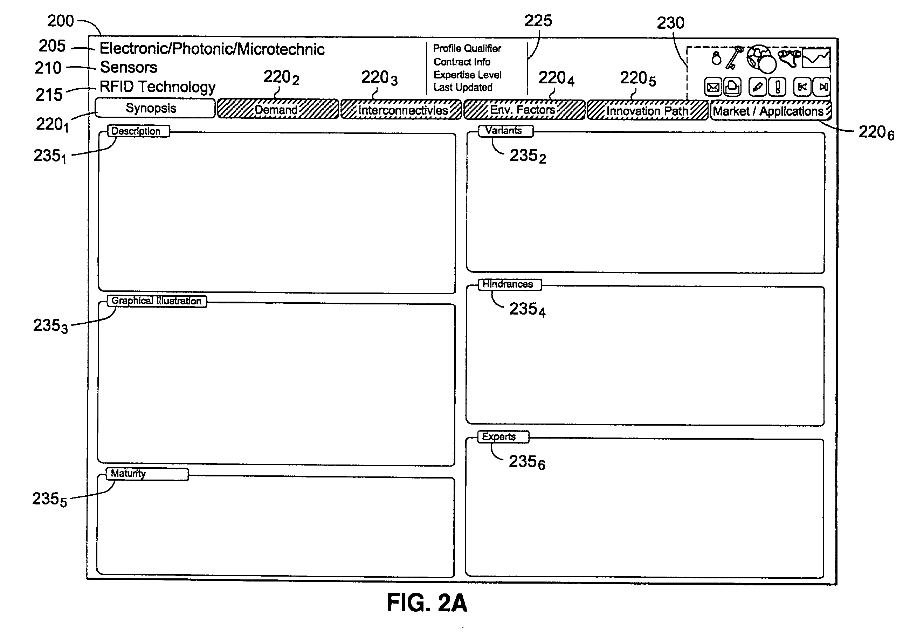

Referring now to FIG. 2A, depicted is one embodiment of a GUI template **200** configured in accordance with the principles of the invention to enable the systematic profiling of subtechnologies. In one embodiment, the GUI template **200** may be accessed from a work station (e.g., work stations **120₁ - 120ₙ**) of an organization-level network (e.g., network **105**). The GUI template **200** may be configured to enable a user to profile a given subtechnology into a technology database (e.g., technology database **110)** in accordance with a field/family structure.

With respect to the field/family structure, every technology is relevant to a certain field, such as materials, electronics, energy or resources. Such areas are referred to herein as technology fields and their related subcategories as technology families. In the embodiment of FIG. 2A, the technology field **205** is the field of electronic/photonic/microtechnic, while the technology family **210** is sensors. Below the technology family **210** is the subtechnology **215** level. In the embodiment of FIG. 2A, the subtechnology **215** level is radio frequency identification technology, or RFID.

Continuing to refer to FIG. 2A, the GUI template **200** may be further comprised of profile creation logistics **225** and one or more database interaction buttons **230.** While any assortment of profile creation information may be included in the profile creation logistics **225,** in one embodiment the individual (or group of individuals) who identified, reviewed and qualified/developed the attribute profile may be included (i.e., profile qualifier). In one embodiment, the database interaction buttons **230** may correspond to printing or emailing a given subtechnology profile, navigating through a sequence of subtechnology profiles, marking or highlighting profiles for later access, and so on.

However, the primary component of any subtechnology profile is the subtechnologies attributes. Subtechnology attributes are a predetermined collection of technology-based attributes, shown as attributes **235₁ - 235₆** in FIG. 2A, which are organized into one or more categories, shown as categories **220₁ - 220₆.** In one embodiment, each category may be separately selectable by clicking on any one of the category tabs (i.e., tabs **220₁ - 220₆**).

As will be described below, each category may have a number of associated attributes relating to the given subtechnology (i.e., subtechnology **215**). Attributes, as a whole, may be described as a set of predetermined traits that, when defined, may encompass everything from the basic description of a subtechnology to the intricate channels through which the world affects it, and it affects the world. Each individual attribute may contain a clip of information that outlines or describes a particular facet of a technology's existence and function. This full collection of a technology's attributes may be referred to as a subtechnology profile. In one embodiment, the attributes may be same regardless of the particular subtechnology being profiled. That is, the attributes may be constant across all subtechnologies in order to be able to uniformly compare subtechnologies.

It should be appreciated that while certain attributes and categories are illustrated with respect to FIGs. 2A - 2H, these are meant as examples only and should not limit the scope of the invention.

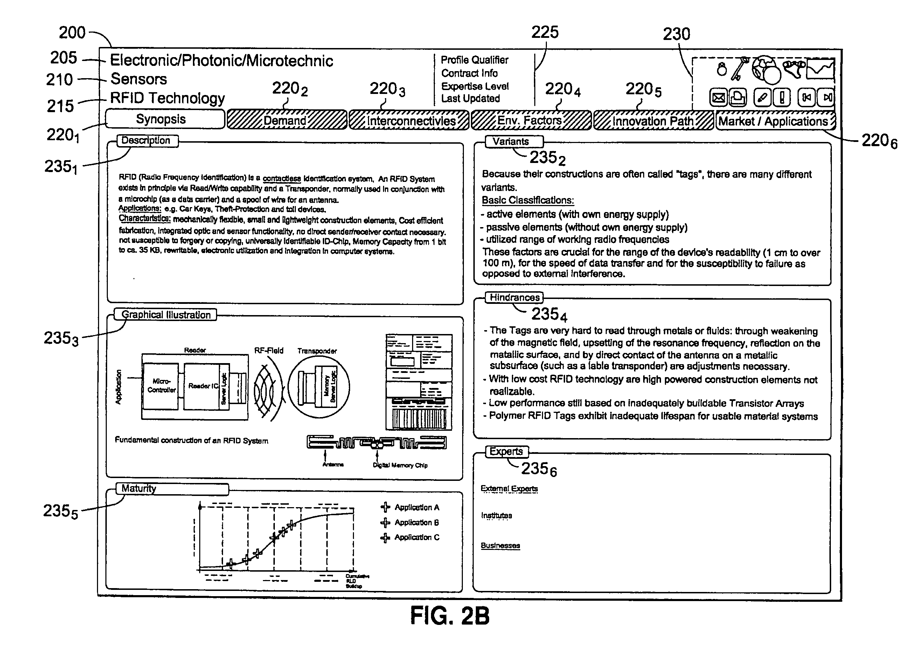

Referring now to FIG. 2B, depicted is the GUI template **200** of FIG. 2A after the various attributes **235₁ - 235₆** have been populated with the appropriate information. In the embodiment of FIG. 2B, the synopsis tab **220₁** has been selected and the attributes associated therewith displayed. In particular, a description attribute **235₁** may be the used to described the subtechnology's **215** general characteristics, features and properties. The variants attribute **235₂** may be used to describe any variations on the subtechnology **215,** which in this case is RFID technology. The graphical illustration attribute **235₃** may be used to include representative visual information, the hindrances attribute **235₄** may be used to describe any known limitations on the subtechnology **215,** the maturity attribute **235₅** may be used to provide an estimate on how far along we are in the expected life of the subtechnology **215,** and known experts in the field may be identified in the experts attribute **235₆.**

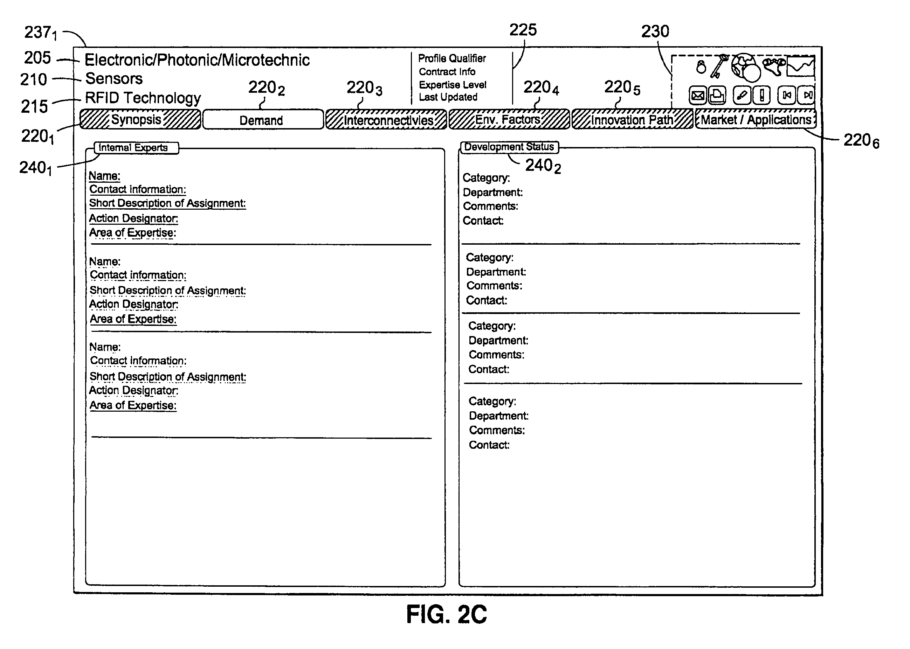

It has been found that simply making technological solutions achievable isn't quite enough unless they are connected with the relevant projects and personnel within a business or company utilizing the invention. Thus, another aspect of the invention is to include the organization-level demand for the subtechnology as a category of attributes in the subtechnologies profile. In short, the demand for a subtechnology may be a set of attributes with the ability to both link the internal demand for the underlying information with the external information itself. In certain embodiments, the invention may also provide a quantitative comparison of a technology's general relevance with the internal relevance potential as it relates to a given company. To that end, FIG. 2C depicts an embodiment of another GUI **237₁** after the demand category tab **220₂** for the subtechnology **215** has been selected. As shown, a different set of attributes is associated with the demand category tab **220.** In particular, an internal expert attribute **240₁** may be used to identify any experts within a given organization, while the development status attribute **240₂** may be used to identify specific projects within the organization which are using, testing or considering the subtechnology **215.** In this fashion, a user may be able to quickly and conveniently identify the level of expertise in a given subtechnology within their own organization.

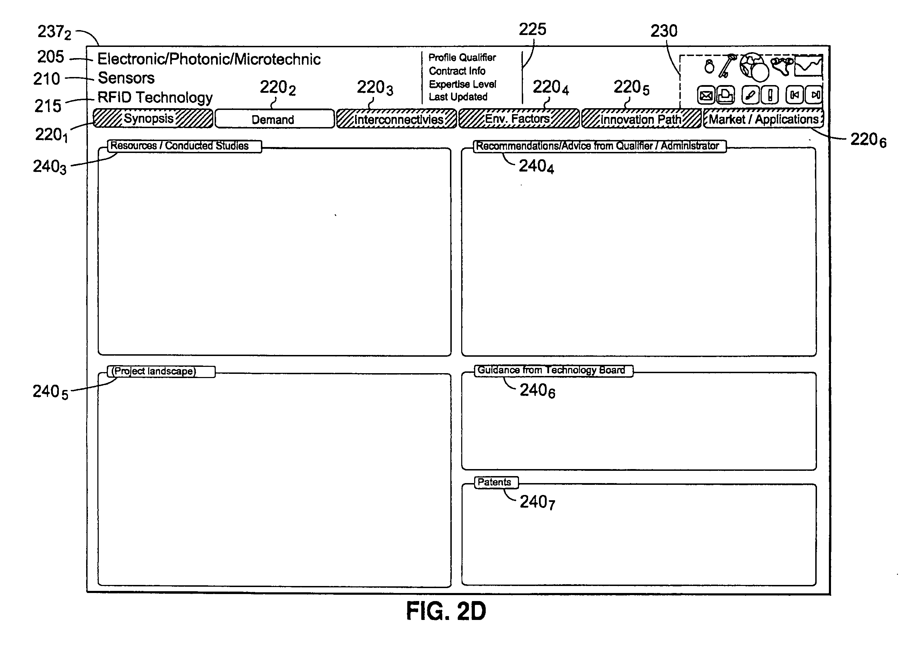

Referring now to FIG. 2D, one embodiment of another GUI **237₂** is depicted showing additional attributes **240₃ - 240₇** for the demand category tab **220₂.** In one embodiment, these additional attributes **240₃ - 240₇** may be accessible by scrolling down or across the GUI **237₁** and GUI **237₂.** In any event, GUI **237₂** may be populated with information relating to any internal or organization-level resources and/or studies (attribute **240₃**), any recommendation or advice from the profile qualifier (attribute **240₄**), any upcoming projects relating to the subtechnology **215** (attribute **240₅**), guidance from the organization's technology board (attribute **240₆**) or any patents filed or issued relating to the particular subtechnology **215** (attribute **240₇**). Additionally, once a technology has been connected with an organization's relevant internal projects, as soon as new innovations emerge with the potential to modify or replace those technologies, the different project teams may be instantly notified without actively having to search for new innovations themselves.

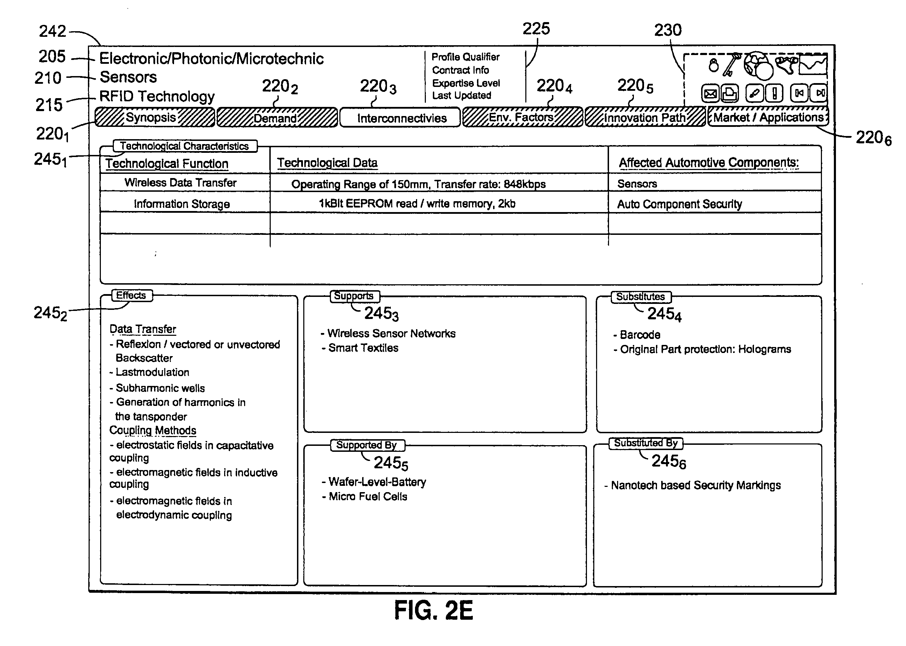

FIG. 2E depicts one embodiment of another GUI **242** after the interconnectivities tab **220₃** for the subtechnology **215** has been selected. The set of attributes **245₁ - 240₆** associated with the interconnectivities tab **220₃** may relate to how the subtechnology 215 is related to one or more other subtechnologies. It has been recognized that one of the keys to progressive technology evolution stems from new innovations that either partially change or entirely replace currently deployed technology. This means that every technology, present or future, has the inherent capability to modify, be modified, replace or be replaced. This phenomenon is referred to herein as technology interconnectivity. To that end, technology interconnectivity may be captured as one or more subtechnology attributes organized under the interconnectivities tab **220₃.**

As shown in FIG. 2E, the exemplary interconnectivity attributes include a technological characteristics attribute **245₁,** which may be used to describe what the technology can achieve, the technologies physical characteristics, and affected components for particular applications. In addition, an effects attribute **245₂** may be used to describe confirmed physical, chemical and biological effects or combinations thereof on which the subtechnology may be based. In addition, a description of which technologies are supported or enabled by the given subtechnology **215** may be included (attribute **245₃**), as well as what other technologies support or enable this subtechnology (attribute **245₅**). Similarly, what technologies may be substituted by or for the given subtechnology **215** may be included in the profile (attributes **245₄** and **245₆,** respectively).

While FIG. 2E depicts only the interconnectivities tab **220₃** as containing interconnectivity information, it should equally be appreciated that one or more of the other categories **220₁ - 220₆** may similarly include such interconnectivity-type attributes in accordance with the principles of the invention.

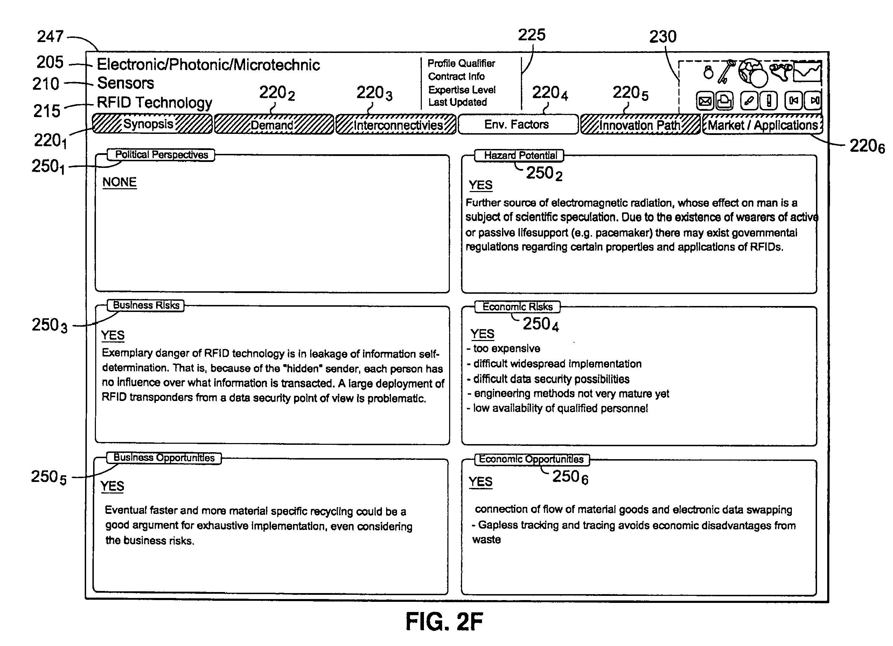

Referring now to FIG. 2F, depicted is one embodiment of a GUI **247** for the subtechnology profile relating to the RFID subtechnology **215** after the environmental factors tab **220₄** has been selected. In one embodiment, the environmental factors category of attributes may be used to catalog any external or surrounding issues which may impact the viability or acceptability of the given subtechnology, including any known political perspectives on the subtechnology (attribute **250₁**), any potential hazards of using the subtechnology (attribute **250₂**), potential business and economic risks (attributes **250₃** and **250₄,** respectively), evolving business and economic opportunities (attributes **250₅** and **250₆,** respectively), etc.

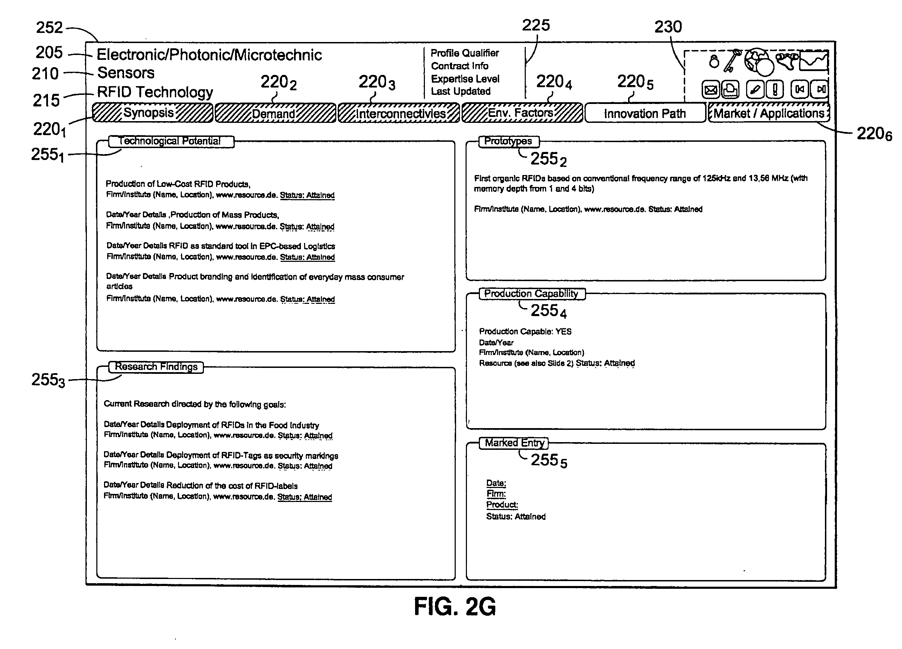

FIG. 2G depicts one embodiment of a GUI **252** for the subtechnology profile relating to the RFID subtechnology **215** after the innovation path tab **220₅** has been selected. In one embodiment, the innovation path category of attributes may be used to catalog the engineering or development patch of the subtechnology **215.** By way of example, under the innovation patch category the subtechnology profile can be supplemented with information relating to the future potential goals made achievable by the deployment of the given subtechnology (attribute **255₁**), any known prototype information (attribute **255₂**), a description of any research findings, such as milestones, relating to the subtechnology **215** (attribute **255₃**), known production capabilities (attribute **255₄**) and market entry information, if any (attribute **255₅**).

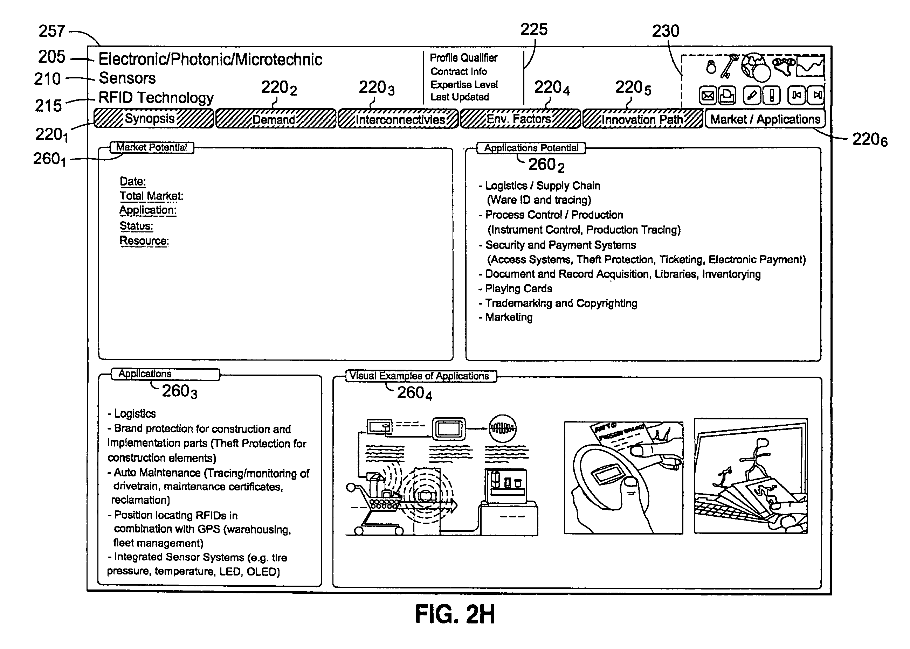

Finally, FIG. 2H depicts an embodiment of another GUI **257** for the subtechnology profile relating to the RFID subtechnology **215** once the market/applications tab **220₆** has been selected. In one embodiment, the market/applications category of attributes may be used to catalog known information for market potential (attribute **260₁**), applications potential (attribute **260₂**), existing applications (attribute **260₃**) and visual examples thereof (attribute **260₄**). Of course, as previously mentioned, FIGs. 2A - 2H include exemplary attributes which are not intended to limit the scope of the invention in any manner.

### Exemplary Embodiments of the Invention

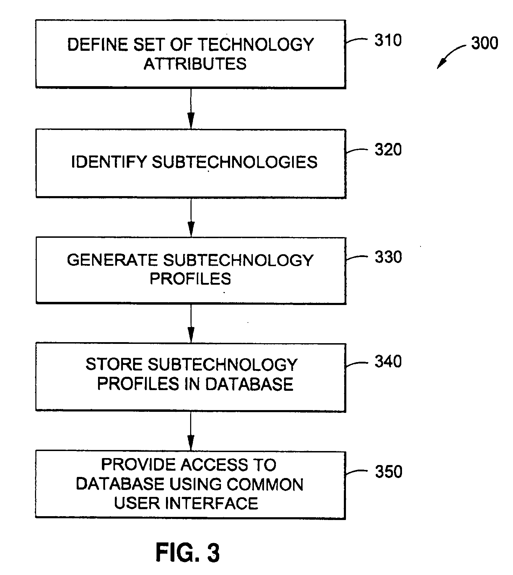

Referring now to FIG. 3, depicted is one embodiment of a process **300** for carrying out one or more aspects of the invention. In particular, process **300** begins at block **310** where a predetermined set of technology attributes (e.g., attributes **235₁ - 235₆,** attributes **240₁ - 240₇,** attributes **245₁ - 245₆,** attributes **250₁ - 250₆,** etc.) may be defined. As previously described in detail, such technology attributes may correspond to set of predetermined traits that, when defined, may encompass everything from the basic description of a subtechnology to the intricate channels through which the world affects it, and it affects the world. Each individual attribute may contain a clip of information that outlines or describes a particular facet of a technology's existence and function. In one embodiment, the full collection of technology attributes defined at block **310** comprises a subtechnology profile. Moreover the defined set of attributes from block **310** may be consistent across all subtechnologies, thereby enabling the uniform comparison of all subtechnologies.

Process **300** may continue to block **320** where a plurality of subtechnologies may be identified. In one embodiment, each of the plurality of subtechologies may be defined or characterized by a common granularity level. As described above, a subtechnology (e.g., subtechnology **215)** may have a granularity level between that of a technology family (e.g., technology family **210**) and a physical effect (such as electroluminescence). It should further be appreciated that, in order to achieve the optimal technology granularity level, and hence properly identify a subtechnology, a systematic set of guidelines and refinement routines may be applied until either a suitable or optimal subtechnology profile is achieved, or the technological concept is deemed outside the optimal complexity level and thus not a proper subtechnology.

Once a plurality of subtechnologies has been properly identified above at block **320,** process **300** may then continue to block **330** where a plurality of subtechnology profiles may be generated. In one embodiment, these subtechnology profiles may correspond to each of the above-identified plurality of subtechnologies, and may be generated based on the previously-defined set of technology attributes (block **310**). While it should be appreciated that numerous approaches may be used consistently with the principles of the invention, in one embodiment a GUI template (e.g., GUI template **200**) may be used to enter the various technology attributes corresponding to each of the plurality of subtechnologies, thereby generating a plurality of subtechnology profiles. These subtechnology profiles may then be stored in a common technology database (e.g., database **110**) at block **340.** From there, a common user interface may be used to provide access to the database, and hence to the subtechnology profiles. In one embodiment, the common user interface may correspond to a GUI based on a template GUI, such as previously-described template GUI **200.** In this fashion, an unlimited array of technologies may be researched, accessed and compared using a common structure and visual representation.

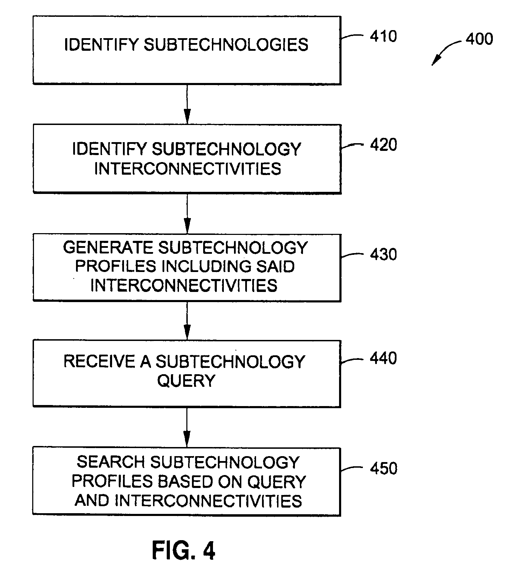

Referring now to FIG. 4, depicted is another embodiment of a process **400** for carrying out one or more aspects of the invention. In particular, process **400** begins at block **410** where a plurality of subtechnologies may be identified. In one embodiment, each of the plurality of subtechologies may be defined or characterized by a common granularity level. As described above, a subtechnology (e.g., subtechnology **215**) may have a granularity level may be between that of a technology family (e.g., technology family **210**) and a physical effect (such as electroluminescence). As with the embodiment described above with reference to FIG. 3, it should further be appreciated that, in order to achieve the optimal technology granularity level, and hence properly identify a subtechnology, a systematic set of guidelines and refinement routines may be applied until either a suitable or optimal subtechnology profile is achieved, or the technological concept is deemed outside the optimal complexity level and thus not a proper subtechnology.

Process **400** may then continue to block **420** where a plurality of subtechnology interconnectivities, relating to two or more of the identified plurality of subtechnologies, may correspondingly be identified. In one embodiment, the a plurality of subtechnology interconnectivities may be represented by a set of subtechnology attributes (e.g., attributes **245₁ - 245₆**) and may relate to how each of the plurality of subtechnologies may be related to one or more other subtechnologies.

In one embodiment, subtechnology interconnectivity may be characterized in the subtechnology's physical characteristics, the physical, chemical and biological effects or combinations thereof on which the subtechnology may be based, the technologies that are supported or enabled by the given subtechnology, the technologies that may be substituted by or for the given subtechnology, etc. As described above, one of the keys to progressive technology evolution stems from new innovations that either partially change or entirely replace currently deployed technology. That is, each and every technology has the inherent capability to modify, be modified, replace or be replaced by another technology. This technology interconnectivity may be identified and captured or represented as one or more subtechnology attributes at block **420.**

Continuing to refer to FIG. 4, process **400** may then continue to block **430** where a plurality of subtechnology profiles may be generated, wherein the subtechnology profiles include the interconnectivites identified above at block 420. It should of course be appreciated that the subtechnology profiles generated at block **430** may further be based on a previously-defined set of technology attributes, which include one or more interconnectivity attributes. While it should be appreciated that numerous approaches may be used consistently with the principles of the invention, in one embodiment a GUI template (e.g., GUI template **200**) may be used to enter the various technology attributes corresponding to each of the plurality of subtechnologies, thereby generating a plurality of subtechnology profiles. These subtechnology profiles may then be stored in a common technology database (e.g., database **110**), which may be accessible using a common user interface, such as the previously-described template GUI **200.**

Process **400** may then continue to block **440** where a subtechnology query may be received. While in one embodiment, the query may be a Boolean keyword query, in another embodiment the query may be comprised of a technological subject, problem or desired solution.

Based on the received query of block **440,** process **400** may then continue to block **450** where the previously-generated plurality of subtechnology profiles may be searched based on both the received query of block **440,** as well as the identified interconnectivities of block **420.** In this regard, it should be appreciated that the system and methodology of the invention includes at least two searching regimes - text searching and connectivity searching. While the text search may rely on a standard database keyword search, the connectivity search provides a much more meaningful function in that it compares one or more attributes of subtechnology records to return a results list of related subtechnologies, which may or may not themselves contain the various search terms. In one embodiment, the attributes that are compared may relate to the interconnectivity of two or more subtechnologies.

In on embodiment, the interconnectivity attributes described above may be used to identify a solution to an engineering problem which may not be otherwise apparent to the engineer. By way of example, suppose an innovation engineer seeks to enhance the brightness of headlights without changing energy consumption or heat output. One embodiment of the invention would return a list of results for, not only any existing relevant subtechnologies, but would also be able to present a view of the entire extent to which the subtechnology exists in the world. In short, this is the essence of the connectivity search - to semantically determine what type of information a query asks for, then through known interconnectivities and various attribute comparisons, present possible technology solutions, including a view of the part of the world in which the technology has relevance. It should be appreciated that, in addition to using interconnectivity attributes to present more meaningful search results, it should equally be appreciated that other subtechnology attributes may be similarly utilized, whether individually or together.

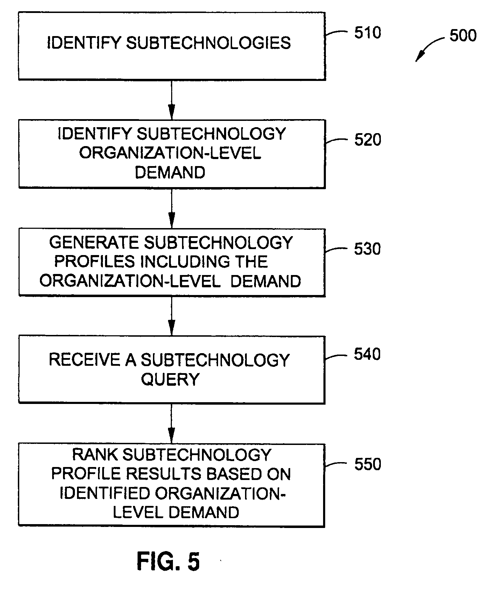

Referring now to FIG. 5, depicted is another embodiment of a process **500** for carrying out one or more aspects of the invention. In particular, process **500** begins at block **510** where, as with process **400,** a plurality of subtechnologies may be identified. Again, each of the plurality of subtechologies may be defined or characterized by a common granularity level between that of a technology family and a physical effect.

It has been found that simply making technological solutions achievable isn't quite enough unless they are connected with the relevant projects and personnel within a business or company utilizing the invention. To that end, process **500** may then continue to block **520** where the organization-level demand and/or expertise, for each of the identified plurality of subtechnologies, may correspondingly be identified. In one embodiment, this organization-level demand and/or expertise may be represented by a set of subtechnology attributes (e.g., attributes **240₁ - 240₇**) and may provide the ability to both link the internal demand for the underlying information with the external information itself. In certain embodiments, the invention may also provide a quantitative comparison of a technology's general relevance with the internal relevance potential as it relates to a given company or organization.

Continuing to refer to FIG. 5, process **500** may then continue to block **530** where a plurality of subtechnology profiles may be generated, wherein the subtechnology profiles include the organization-level demand attributes identified above at block **520.** As described above, however, it should further be appreciated that the subtechnology profiles generated at block **530** may also include additional, predefined technology attributes. Moreover, as with the processes of FIGs. 3 - 4, a GUI template (e.g., GUI template **200**) may be used to enter the various technology attributes corresponding to each of the plurality of subtechnologies, thereby generating a plurality of subtechnology profiles. These subtechnology profiles may then be stored in a common technology database (e.g., database **110**), which may be accessible using a common user interface, such as the previously-described template GUI **200.**

Process **500** may then continue to block **540** where a subtechnology query may be received. As with the process of FIG. 4, the received at block **540** may be a Boolean keyword query, in another embodiment the query may be comprised of a technological subject, problem or desired solution. Based on the received query of block **540,** process **500** may then continue to block **550** where, following a search of the underlying technology database (e.g., database **110**), a plurality of subtechnology search results may be ranked based on the identified organization-level demand information of block **520.** In this fashion, the most relevant technologies, not only to a particular engineering discipline, but also to a particular organization, may be quickly identified. In other embodiments, the ranking of the subtechnology search results may be based, at least in part, on a quantitative comparison of the subtechnology's general relevance to the user, with the internal relevance to the user's company or organization.

In still another embodiment, once a subtechnology has been associated with an particular project, project members may be automatically alerted to any new innovations which have the potential to modify or replace the subject subtechnology.

It should further be appreciated that, with respect to each of the processes described above with reference to FIGs. 3 - 5, one aspect of the invention is to provide a semantic network (e.g., organization-level network **105** of FIG. 1), which is configured to utilize a special form of knowledge representation that in turn allows a system to not only deal with the transfer of information, but also designate a type to that information. The importance of this is related to the attribute structure described in detail above, whereby a certain type of information (e.g., the attribute title) is defined, followed by the information itself (e.g., the contents of the attribute). When used in conjunction with advanced searching algorithms, this methodology allows the invention to determine what type of information is relevant to a query (e.g., which attribute) then display or manipulate the information itself (e.g., the contents of the attribute). This is the basis behind semantically determining the relevance between an inputted query and the information in the technology database.

While the invention has been described in connection with various embodiments, it should be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for providing and managing technology-based information comprising the acts of:
defining a set of technology attributes;
identifying a plurality of subtechnologies, wherein each of the plurality of subtechnologies is **characterized by** a common granularity level;
generating a plurality of subtechnology profiles corresponding to each of said plurality of subtechnologies based on said set of technology attributes;
storing said plurality of subtechnology profiles in a technology database; and
providing access to said technology database using a common user interface.

2. The method of claim 1, wherein defining the set of technology attributes further comprises applying a common set of technology attributes to each of the plurality of subtechnologies.

3. The method of claim 1, further comprising organizing the set of technology attributes into a plurality of attribute categories, wherein the plurality of attribute categories comprises one or more of a synopsis category, an organization-level demand category, an interconnectivities category, an environmental factors category, an innovation path category and a market/applications category.

4. The method of claim 1, wherein the common granularity level comprises a level of technological complexity between a technology family and a physical effect.

5. The method of claim 1, wherein identifying the plurality of subtechnologies comprises identifying the plurality of subtechnologies by applying a predetermined selection procedure across different technological fields.

6. The method of claim 1, further comprising organizing said plurality of subtechnologies in the technology database according to a field/family technology structure.

7. The method of claim 1, wherein prior to generating the plurality of subtechnology profiles, the method further comprises receiving technology attributes for said plurality of subtechnologies via a template graphical user interface.

8. The method of claim 1, further comprising:
receiving a subtechnology query;
searching the plurality of subtechnology profiles based on said subtechnology query to generate a plurality of subtechnology search results.

9. The method of claim 8, further comprising ranking the plurality of subtechnology search results based on subtechnology demand information.

10. The method of claim 9, wherein the subtechnology demand information corresponds to organization-level information relating to at least one of internal demand and expertise for a given subtechnology.

11. A system for providing and managing technology-based information comprising:
a network;
a technology database; and
a server coupled to the technology database and to the network, wherein the server includes processing circuitry to execute programming code to,
receive a set of predefined technology attributes,
generate a plurality of subtechnology profiles corresponding to each of a plurality of subtechnologies based on said set of predefined technology attributes, wherein each of the plurality of subtechnologies is **characterized by** a common granularity level,
store said plurality of subtechnology profiles in the technology database, and
provide access to said technology database over the network using a common user interface.

12. The system of claim 11, wherein the set of predefined technology attributes corresponds to a common set of technology attributes applied to each of the plurality of subtechnologies.

13. The system of claim 11, wherein the server is further to organize the set of technology attributes into a plurality of attribute categories, wherein the plurality of attribute categories comprises one or more of a synopsis category, an organization-level demand category, an interconnectivities category, an environmental factors category, an innovation path category and a market/applications category.

14. The system of claim 11, wherein the common granularity level comprises a level of technological complexity between a technology family and a physical effect.

15. The system of claim 11, wherein the plurality of subtechnologies are determined by applying a predetermined selection procedure across different technological fields.

16. The system of claim 11, wherein the server is further to organize said plurality of subtechnologies in the technology database according to field/family technology structure.

17. The system of claim 11, wherein prior to generating the plurality of subtechnology profiles, the server is further to receive technology attributes for said plurality of subtechnologies via a template graphical user interface.

18. The system of claim 11, wherein the server is further to:
receive a subtechnology query, and
search the plurality of subtechnology profiles based on said subtechnology query to generate a plurality of subtechnology search results.

19. The system of claim 18, wherein the server is further to rank the plurality of subtechnology search results based on subtechnology demand information.

20. The system of claim 19, wherein the subtechnology demand information corresponds to organization-level information relating to at least one of internal demand and expertise for a given subtechnology.
